# EUROPÄISCHE PATENTSCHRIFT

(11) **EP 1 923 599 B1**
(45) Veröffentlichungstag und Bekanntmachung des Hinweises auf die Patenterteilung: **14.12.2011**
(21) Anmeldenummer: 07020880.6
(22) Anmeldetag: 25.10.2007
(51) Int. Cl.: F16F 15/131

(54) **Zweimassenschwungrad**
Dual mass flywheel
Volant double masse

(30) Priorität: 20.11.2006 DE 102006054518
(43) Veröffentlichungstag der Anmeldung: 21.05.2008
(73) Patentinhaber: Schaeffler Technologies GmbH & Co. KG, 91074 Herzogenaurach (DE)
(72) Erfinder: Ehrmann, Klemens, 77855 Achern (DE); Mende, Hartmut, 77815 Bühl (DE); Almert, Peter, 77866 Rheinau (DE)

(56) Entgegenhaltungen:
- EP-A2- 1 691 107
- DE-A1- 3 721 712
- DE-C2- 3 745 156

## Beschreibung

Die Erfindung betrifft eine Einrichtung zum Dämpfen von Schwingungen, insbesondere zwischen einem Motor und einem Antriebsstrang eines Fahrzeuges, welche ein so genanntes Zweimassenschwungrad bildet. Die Erfindung betrifft insbesondere ein Zweimassenschwungrad, bestehend aus einer mit der Abtriebswelle eines Motors verbindbaren Primärmasse und einer mit dem Eingangsteil eines Getriebes verbindbaren Sekundärmasse, die mittels mindestens einer Lagerung konzentrisch und axial zueinander positioniert sind und entgegen wenigstens der Wirkung einer Dämpfungseinrichtung mit Energiespeichern, insbesondere Schraubendruckfedern, zumindest begrenzt zueinander verdrehbar sind, wobei die Energiespeicher in einer ringförmigen, vorzugsweise von den Bauteilen der Primärmasse gebildeten und ein viskoses Medium beinhaltenden, ringartigen Kammer aufgenommen sind und die die Kammer bildenden Bauteile sowie die andere Masse Beaufschlagungsbereiche für die Energiespeicher tragen bzw. aufweisen.

Derartige Einrichtungen zum Dämpfen bzw. Zweischwungräder sind beispielsweise durch die DE 37 45 156 C5, die DE 37 21 712 C2, die DE 41 17 582 A1 und die DE 41 17 579 A1 bekannt geworden.

Solche als Zweimassenschwungräder ausgestaltete Drehmomentübertragungseinrichtungen haben sich bei Kraftfahrzeugen ab der Mittelklasse, insbesondere in Verbindung mit Dieselmotoren, allgemein bewährt, wobei jedoch bei kleineren Fahrzeugen sich solche Einrichtungen trotz ihrer Vorteile aufgrund des verhältnismäßig hohen Preises immer noch nicht auf breiter Basis durchsetzen konnten.

Der vorliegenden Erfindung lag die Aufgabe zugrunde, Drehmomentübertragungseinrichtungen der eingangs genannten Art zu schaffen, die einen sehr kostengünstigen Aufbau aufweisen, weiterhin eine kompakte und somit platzsparende Bauweise besitzen, so dass sie auch bei Fahrzeugen mit sehr begrenztem Einbauraum, wie dies der Fall ist bei kleinen Kraftfahrzeugen mit Queranordnung von Motor und Getriebe, eingesetzt werden können. Weiterhin soll eine erfindungsgemäß ausgestaltete Drehmomentübertragungseinrichtung, wie insbesondere ein Zweimassenschwungrad, in besonders einfacher Weise montierbar sein und eine kostengünstige Herstellung gewährleisten. Weiterhin soll die Drehmomentübertragungseinrichtung eine robuste Ausgestaltung aufweisen, die auch die bei schwingungstechnisch besonders kritischen Motoren und aufgrund von entgegengerichtet rotierenden Massen auftretenden Spitzenmomente schadensfrei abfängt bzw. dämpft. Derartige Spitzenmomente können das 10-bis 15-fache und teilweise auch mehr des Nominaldrehmomentes des Motors bzw. der Brennkraftmaschine betragen.

Bei einer als Zweimassenschwungrad ausgebildeten Drehmomentübertragungseinrichtung, welche zumindest aus einer mit der Abtriebswelle eines Motors verbindbaren Primärmasse und einer mit dem Eingangsteil eines Getriebes verbindbaren Sekundärmasse, die mittels mindestens einer Lagerung konzentrisch und axial zueinander positioniert sind und entgegen der Wirkung wenigstens einer Dämpfungseinrichtung mit Energiespeichern zumindest begrenzt zueinander verdrehbar sind, wobei die Energiespeicher in einer ringförmigen, von den Bauteilen der Primärmasse gebildeten und ein viskoses Medium beinhaltenden ringartigen Kammer aufgenommen sind, werden die der vorliegenden Erfindung zugrunde liegenden Aufgaben unter anderem dadurch gelöst, dass die die Kammer bildenden Bauteile und die Sekundärmasse Beaufschlagungsbereiche für die Energiespeicher tragen, wobei die ringartige Kammer zumindest durch zwei Bauteile begrenzt ist, die radial außerhalb der Energiespeicher miteinander dicht verbunden sind und radial beabstandet ist von den radial äußeren Konturen der Primärmasse, wobei radial außerhalb der ringartigen Kammer die Primärmasse und die Sekundärmasse jeweils einander zugeordnete Anschläge aufweisen zur Begrenzung der Relativverdrehung zwischen den beiden Massen.

Besonders zweckmäßig kann es sein, wenn die Primärmasse einen ringartigen axialen Ansatz bildet, der radial beabstandet ist von der zumindest die Energiespeicher aufnehmenden ringartigen Kammer. Dieser axiale Ansatz kann die Kammer bzw. die diese begrenzenden Bereiche der entsprechenden Bauteile zumindest teilweise axial übergreifen. Auf diesem axialen Ansatz kann ein Anlasserzahnkranz aufgenommen sein. Auch kann an diesem axialen Ansatz zumindest eine Markierung angebracht sein, die als Geber dient, zum Beispiel zur Ermittlung der winkelmäßigen Position der mit dem Zweimassenschwungrad in Wirkverbindung stehenden Kurbelwelle des Motors.

Der ringartige axiale Ansatz der Primärmasse und die die ringartige Kammer radial nach außen hin begrenzenden Bereiche der die Kammer bildenden Bauteile können in vorteilhafter Weise einen ringförmigen, axial offenen Bauraum begrenzen, der zumindest die Anschläge der beiden Massen wenigstens teilweise aufnimmt.

In vorteilhafter Weise kann zumindest in einer der Relativverdrehrichtungen ein zumindest elastisches bzw. dämpfendes Anschlagelement zwischen den einander zugeordneten Anschlägen der beiden Massen vorgesehen sein. In vorteilhafter Weise kann ein derartiges Anschlagelement sowohl für den Zugbetrieb als auch für den Schubbetrieb, also für beide Relativverdrehrichtungen zwischen den Massen vorgesehen werden. Derartige Anschlagelemente ermöglichen zumindest eine teilweise Dämpfung der verbleibenden Anschlagenergie. Dadurch können die evtl. auftretenden Anschlaggeräusche zumindest erheblich reduziert werden. In vorteilhafter Weise können derartige Anschlagelemente aus einem Kunststoff oder einem Elastomermaterial bestehen. Zweckmäßig kann es auch sein, wenn eine Kombination derartiger Materialien verwendet wird. Die Anschlagelemente können jedoch auch durch Schraubenfedern mit einer hohen Federsteifigkeit gebildet werden bzw. zumindest eine derartige Schraubenfeder umfassen.

Besonders zweckmäßig kann es sein, wenn die Anschlagelemente Bestandteil eines Anschlagdämpfers sind. Ein derartiger Anschlagdämpfer kann sowohl elastisch verformbare Elemente, wie zum Beispiel Schraubendruckfedern, als auch Reibmittel umfassen. Obwohl die Anschlagelemente bzw. die Anschlagkörper verdrehfest mit den Anschlägen der Primärmasse und/oder der Sekundärmasse sein können, kann es auch zweckmäßig sein, wenn diese Anschlagelemente bzw. Anschlagkörper umfangsmäßig verschiebbar zwischen den Anschlägen der beiden Massen angeordnet sind. Besonders vorteilhaft kann es dabei sein, wenn hierfür zumindest eine der Massen eine ringartige Fläche aufweist, entlang derer die Anschlagelemente bzw. die Anschlagkörper verschiebbar sind. Durch diese Verschiebung kann zusätzlich eine Reibungsdämpfung erzeugt werden. Die Größe dieser Reibungsdämpfung kann dabei drehzahlabhängig sein.

Die Anschläge der Sekundärmasse und/oder der Primärmasse können in vorteilhafter Weise durch einstückig angeformte axiale Vorsprünge gebildet sein.

Besonders vorteilhaft kann es sein, wenn die Sekundärmasse als Blechformteil ausgebildet ist.

In vorteilhafter Weise kann die ringartige Kammer zumindest durch zwei Bauteile begrenzt sein, die radial außerhalb der Energiespeicher sich gegenüber liegende flächige, ringförmige Bereiche besitzen, zwischen denen eine flächige, ringförmige Dichtung eingespannt ist. Eine derartige Dichtung kann in besonders einfacher und kostengünstiger Weise hergestellt werden und eine einwandfreie Abdichtung der ringartigen Kammer gewährleisten. Durch die Verwendung einer derartigen Dichtung kann die üblicherweise verwendete Schweißverbindung über den gesamten Umfang der Bauteile entfallen. Dadurch kann eine negative Beeinflussung der Eigenschaften des in der Kammer aufgenommenen, viskosen Mediums infolge von auftretenden hohen Temperaturen bei Bildung der Verschweißung vermieden werden. Um eine besonders kostengünstige Herstellung eines solchen Zweimassenschwungrades zu gewährleisten, kann es besonders vorteilhaft sein, wenn zumindest eines der Bauteile, vorzugsweise beide Bauteile, als Blechformteil aus Stahl ausgebildet ist.

Um eine einwandfreie Abdichtung zu gewährleisten, ist es zweckmäßig, wenn die ringförmige Dichtung ein großes Verhältnis zwischen der Breite der Dichtung und der Dicke des diese bildenden Materials besitzt. Dieses Verhältnis kann in vorteilhafter Weise in der Größenordnung zwischen 10 und 100, vorzugsweise zwischen 15 und 60 liegen. Bei einer Dichtungsdicke von 0,5 mm würde somit die Ringbreite in der Größenordnung zwischen 7,5 und 30 mm liegen. Die ringförmige Dichtung kann als separate Dichtung, also als eigenes Bauteil, ausgebildet sein. Zur Bildung der ringförmigen Dichtung kann jedoch auch zumindest auf einem der ringförmigen Bereiche eine pastöse Dichtmasse aufgebracht werden. Derartige Dichtmassen können selbstaushärtend sein oder zum Beispiel mittels Ultraschall oder UV-Bestrahlung aktiviert werden.

Eine besonders kostengünstige Verbindung zwischen den die ringförmigen Bereiche aufweisenden Bauteilen kann mittels Nietelementen erfolgen, die einstückig mit zumindest einem der die ringförmigen Bereiche bildenden Bauteile ausgebildet sind. Derartige Nietelemente können als so genannte Nietwarzen ausgebildet sein, die einstückig ausgebildet sind mit einem Blechformteil, das zur Bildung der ringartigen Kammer dient. Derartige Nietwarzen werden durch Ausnehmungen eines anderen Blechformteils axial hindurchgesteckt und die axial überstehenden Bereiche zu einem Nietkopf umgeformt. Die innerhalb der ringförmigen Bereiche bzw. der ringförmigen Dichtung vorgesehenen Verbindungen, wie insbesondere Nietverbindungen, können in Bezug auf die Rotationsachse des entsprechenden Zweimassenschwungrades auf unterschiedlichen Radien angeordnet sein. Die Verbindungen können dabei in vorteilhafter Weise zumindest in zwei Gruppen unterteilt sein, die auf unterschiedlichen Radien angeordnet sind. Die Verbindungen und die Dichtung können derart angeordnet und ausgebildet sein, dass außer den Verbindungen selbst kein metallischer Kontakt zwischen den zu verbindenden Bauteilen besteht.

Besonders zweckmäßig kann es sein, wenn das die ringförmige Dichtung bildende Material zumindest in axialer Richtung elastische Eigenschaften aufweist und in einem elastisch verspannten Zustand zwischen den ringförmigen Bereichen der die Kammer bildenden Bauteile verbaut ist. Eine kostengünstige Herstellung der ringförmigen Dichtung kann durch den Einsatz eines auf Zellulosebasis bestehenden Materials erfolgen. Der auf Zellulosebasis hergestellte Dichtungsring kann dabei eine Latexbindung und/oder Latexbeschichtung aufweisen.

Gemäß einem weiteren erfinderischen Gedanken kann ganz allgemein die Sekundärmasse als Blechformteil ausgebildet sein und unmittelbar die Reibfläche für wenigstens einen Reibbelag einer Kupplungsscheibe bilden, wobei radial außerhalb der Reibfläche axial gegenüber dieser versetzte Befestigungsbereiche für das Gehäuse einer Reibungskupplung und radial innerhalb der Reibfläche axial gegenüber dieser versetzte Verbindungsbereiche für zumindest ein scheibenförmiges Bauteil vorhanden sind, wobei die Befestigungsbereiche und die Verbindungsbereiche in Bezug auf die Reibfläche axial in entgegengesetzte Richtungen versetzt sind. Es kann weiterhin vorteilhaft sein, wenn das Blechformteil radial innen einen einstückig angeformten, ringförmigen Ansatz trägt, der eine Öffnung begrenzt, wobei die Mantelfläche der Öffnung zur Bildung einer Gleitlagerung oder zur Aufnahme einer Gleitlagerung dienen kann.

Weitere vorteilhafte Funktionsmerkmale sowie zweckmäßige bauliche und wirkungsmäßige Weiterbildungen der Erfindung werden in Zusammenhang mit der folgenden Figurenbeschreibung näher erläutert.

Dabei zeigen:
- Figur 1: eine Ansicht einer erfindungsgemäß ausgestalteten Schwingungsdämpfungseinrichtung mit einem Ausbruch,
- Figur 2: einen Schnitt gemäß der Linie II-II der Figur 1,
- Figur 3: Einen Schnitt gemäß der Linie III-III der Figur 1 und
- Figur 4: einen Schnitt gemäß der Linie IV-IV der Figur 1.

Die in den Figuren dargestellte Drehschwingungsdämpfungseinrichtung 1 bildet ein so genanntes Zweimassenschwungrad 2, das eine Primärmasse 3 und eine Sekundärmasse 4 umfasst, die über eine Lagerung 5 zueinander zentriert und rotierbar gelagert sind. Die Lagerung 5 ist bei dem dargestellten Ausführungsbeispiel durch ein so genanntes Gleitlager gebildet. Bezüglich der Funktion und möglichen Ausgestaltung derartiger Gleitlager wird auf die DE 198 34 728 A1 verwiesen, so dass im Rahmen der vorliegenden Anmeldung diesbezüglich nicht näher eingegangen werden muss.

Die Primärmasse 3 und die Sekundärmasse 4 sind durch Blechformteile gebildet, die vorzugsweise als Stanz- und/oder Prägeteile ausgeführt sind. Derart hergestellte Teile können praktisch werkzeugfallend hergestellt werden, so dass eine nachträgliche spanende Bearbeitung entfallen kann. Lediglich evtl. notwendige Verschraubungsgewinde müssen gegebenenfalls nachträglich eingebracht werden. Dieser nachträgliche Arbeitsgang kann jedoch durch Verwendung von gewindeschneidenden Schrauben bzw. gewindefurchenden Schrauben entfallen. Bei Verwendung von gewindefurchenden Schrauben kann das Gewinde anstatt durch einen Schneidvorgang durch Materialverdrängung hergestellt werden. Dadurch kann eine erhöhte Festigkeit der Gewindegänge erzielt werden.

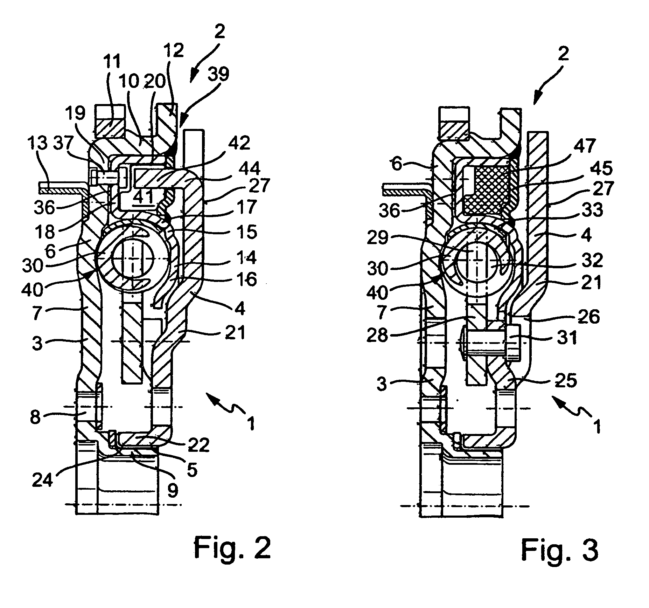

Wie aus Figur 2 ersichtlich, besteht die Primärmasse 3 aus einem mit der Abtriebswelle eines Motors verbindbaren Blechformteil 6, das einen radial verlaufenden Bereich 7 besitzt, der radial innen Verschraubungsöffnungen 8 aufweist. Das als Blechformteil ausgebildete Bauteil 6 trägt innen einen axialen Ansatz 9, der hülsenartig bzw. rohrartig ausgebildet und hier einstückig mit dem Bauteil 6 ist. Radial außen geht das Bauteil 6 in einen ringförmigen axialen Ansatz 10 über, der hier ebenfalls einstückig mit dem Bauteil 6 ausgeführt ist. Auf diesem axialen Ansatz 10 ist hier ein Anlasserzahnkranz 11 aufgenommen. Der axiale Ansatz 10 wiederum geht hier in einen radial nach außen weisenden, ringförmigen Bereich 12 über. Der ringförmige Bereich 12 kann gegebenenfalls am Umfang eingebrachte Markierungen, zum Beispiel Vertiefungen bzw. Zähne, aufweisen, die für das Motormanagement dienen. Bei dem dargestellten Ausführungsbeispiel ist jedoch hierfür auf der dem Motor zugewandten Seite des Bauteils 6 ein spezielles Geberblech 13 vorgesehen.

Die Primärmasse 3 umfasst weiterhin ein Blechformteil 14, das hier eine wesentlich geringere Materialstärke aufweist als das Blechformteil 6. Die Materialdicke des Blechformteiles 14 kann in der Größenordnung von 20 bis 50 %, vorzugsweise 20 bis 30 %, der Materialdicke des Blechformteiles 6 betragen. In vorteilhafter Weise kann zumindest das dünnere Blechformteil 14 aus gehärtetem Material bestehen, wodurch ein wesentlich höherer Widerstand gegen Verschleiß bzw. Durcharbeitung gewährleistet ist.

Das Blechformteil 14 bildet einen topfförmigen Bereich 15, der radiale Abschnitte 16 und axiale Abschnitte 17 umfasst. Die axialen Abschnitte 17 gehen hier in einen ringförmigen Bereich 18 über, der radial nach außen verläuft und einem ringförmigen Abschnitt 19 der radialen Wandung 7 benachbart ist. Der ringförmige Bereich 18 geht bei dem dargestellten Beispiel in einen axial verlaufenden Bereich 20 über, der innen den ringförmigen Absatz 10 tangiert. Zwischen dem axialen Bereich 20 und dem ringförmigen Ansatz 10 kann ein radialer Abstand vorhanden sein. Es kann jedoch auch zweckmäßig sein, über diese Bereiche die Bauteile 6 und 14 zu zentrieren bzw. vorzuzentrieren.

Der ringförmige Absatz 10 und der axiale Bereich 20 können jedoch auch über eine Pressverbindung miteinander verbunden sein. Hierfür kann beispielsweise das Bauteil 14 axial in das Bauteil 6 eingepresst werden. Eine derartige Verbindung kann jedoch auch mittels einer Schrumpfverbindung, die gegebenenfalls mit einer Pressverbindung kombiniert werden kann, erfolgen. Hierfür kann vor dem Zusammenbau das Bauteil 6 erwärmt und/oder das Bauteil 14 abgekühlt werden. Bei der Herstellung einer derartigen Verbindung kann, falls notwendig, auch ein Dichtmittel bzw. eine Dichtmasse zwischen den Bereichen 20 und 10 und/oder zwischen den Bereichen 18 und 19 vorgesehen werden. Eine derartige Dichtmasse kann flüssig oder pastös sein und beispielsweise silikonhaltig sein. Die Dichtmasse kann dabei gleichzeitig Klebeigenschaften besitzen. Auch ist es zweckmäßig, wenn die Dichtmasse eine auftragbare Beschichtungsmasse bildet. Die Dichtungsmassen können selbstaushärtend sein oder aber durch Bestrahlung aktiviert werden, zum Beispiel mittels UV-Strahlung. Die Dichtungsmassen können auch so genannte Mikrokapseln beinhalten, die beim Zusammenfügen der entsprechenden Bauteile oder durch Bestrahlung (UV- und/oder Hitzebestrahlung) zerstört werden und den Aktivator und/oder Katalysator freigeben.

Es können jedoch auch Dichtungen verwendet werden, die zwischen entsprechend angepasste Flächen bzw. Bereiche, wie zum Beispiel den Bereich 18 und den Abschnitt 19, eingespannt werden.

Die Sekundärmasse 4 ist hier ebenfalls durch ein Blechformteil 21 gebildet, das im Wesentlichen radial verläuft und radial innen einen hier einstückig angeformten, axialen Ansatz 22 aufweist. Der axiale Ansatz 22 ist axial in Richtung des radialen Bereiches 7 gerichtet und bildet eine zylindrische Aufnahme 23, in die hier die Gleitlagerbuchse 24 eingepresst ist.

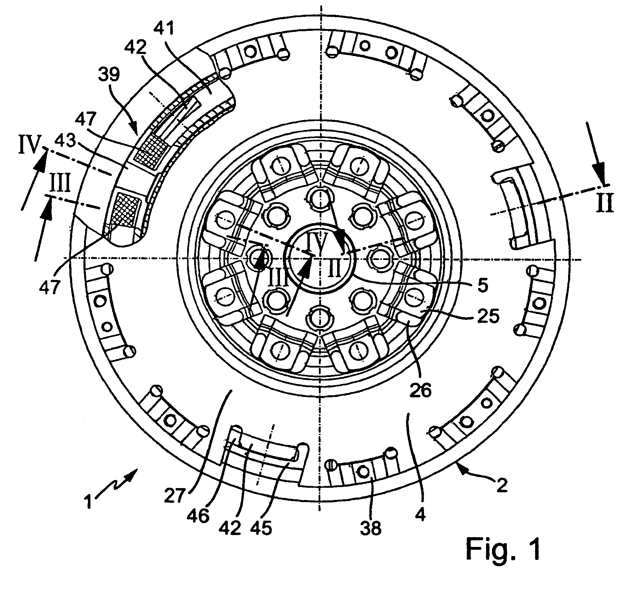

Wie aus Figur 1 und 3 ersichtlich, besitzt das Blechformteil 21 einstückig herausgeformte laschenförmige Befestigungsbereiche 25, die in Richtung des radialen Bereiches 7 des Blechformteiles 6 gegenüber den benachbarten Bereichen des Blechformteiles 21 axial versetzt sind. Es sind mehrere über den Umfang verteilte, derartige Befestigungsbereiche 25 vorgesehen, die vorzugsweise winkelmäßig gleichmäßig verteilt sind. In vorteilhafter Weise können zumindest zwei derartige Befestigungsbereiche vorhanden sein, wobei zur Übertragung von hohen Drehmomenten zum Beispiel auch drei und mehr derartige Befestigungsbereiche 25 Verwendung finden können. Bei dem dargestellten Ausführungsbeispiel sind die Befestigungsbereiche 25 durch partielles Heraustrennen aus dem das Bauteil 21 bildenden Blech gebildet. Die als Laschen 25 ausgebildeten Befestigungsbereiche können dabei durch zumindest partielles einfaches Durchtrennen und/oder durch zumindest partielles Umschneiden aus dem Blechmaterial herausgeformt werden.

Die dargestellte Variante hat den Vorteil, dass durch das Heraustrennen bzw. Umschneiden der Befestigungslaschen 25 axiale Durchlässe in der Sekundärschwungmasse 4 gebildet werden, die eine Luftzirkulation zur Kühlung der Drehmomentübertragungseinrichtung, insbesondere der Sekundärmasse 4, ermöglichen. Die axialen Durchlässe bzw. Kühlöffnungen 26 und die Befestigungslaschen 25 sind radial innerhalb der durch die Sekundärmasse 4 gebildeten Reibfläche 27 für den Reibbelag einer Kupplungsscheibe vorgesehen.

In Abänderung der dargestellten Ausführungsform der Sekundärmasse 4 können die axial in Richtung des radialen Bereiches 7 hervorstehenden Befestigungsbereiche 25 auch durch Anprägungen gebildet sein. Derartige Anprägungen können, axial in Richtung von der Reibfläche 27 her betrachtet, taschenförmige Vertiefungen bilden. Zur Erzeugung einer Kühlluftzirkulation können bei einer derartigen Ausführungsform in Umfangsrichtung zwischen den Anprägungen entsprechend ausgebildete axiale und/oder radiale Öffnungen vorgesehen werden. Die den Öffnungen benachbarten Bereiche können dabei eine Formgebung aufweisen, welche die gewünschte Luftzirkulation begünstigt, also beispielsweise belüftungsflügelartig bzw. schaufelartig wirken. Hierfür kann das Blechmaterial entsprechend angeprägt werden und/oder entsprechende Blechbereiche verdrillt und/oder axial aufgestellt werden.

Wie aus Figur 3 zu entnehmen ist, dienen die Befestigungsbereiche 25 zur drehfesten Koppelung und Positionierung eines scheibenartigen bzw. flanschartigen Bauteils 28, welches radiale Ausleger 29 besitzt, die zur Beaufschlagung von Federn 30 dienen, die sich einer Relativverdrehung zwischen den beiden Schwungmassen 3 und 4 widersetzen. Das ringförmige Bauteil 28 ist bei dem dargestellten Ausführungsbeispiel mit den Befestigungsbereichen 25 über Nietverbindungen 31 verbunden. Bei dem dargestellten Ausführungsbeispiel sind zur Bildung der Nietverbindungen 31 getrennte Nietelemente 31a vorgesehen. Es können jedoch auch Nietelemente zum Einsatz kommen, die einstückig aus den Befestigungsbereichen 25 und/oder dem flansch- bzw. scheibenförmigen Bauteil 28 axial herausgeformt sind. Um eine ausreichende Länge dieser Nietelemente zu gewährleisten, kann es vorteilhaft sein, wenn diese axial hohl ausgebildet sind. Diese Nietelemente können jedoch auch voll ausgebildet werden, wobei gegebenenfalls zur Bildung derartiger Nietelemente eine partielle, flächige Dickenverringerung des Ausgangsblechmaterials vorteilhaft sein kann.

Die Energiespeicher bildenden Federn 30 sind in einem ringförmigen Raum 32 aufgenommen, der durch die beiden Bauteile 6 und 14 begrenzt wird. Der ringförmige Raum 32 kann in vorteilhafter Weise zumindest teilweise mit einem Schmiermittel bzw. viskosen Medium, wie zum Beispiel Fett, befüllt sein.

Bei dem dargestellten Ausführungsbeispiel ist im radial äußeren Bereich der ringförmigen Kammer 32 ein Verschleißschutz 33 vorgesehen, der zwischen den durch Schraubenfedern 30 gebildeten Energiespeichern und den axialen Abschnitten 17 vorgesehen ist. Der Verschleißschutz 33 ist hier durch schalenartige Einlagen gebildet, die sich in Umfangsrichtung zumindest über die Länge der Schraubenfedern 30 erstrecken. Bei dem dargestellten Ausführungsbeispiel ist die Verschleißschutzschale 33, im Querschnitt betrachtet, zumindest annähernd dem Außendurchmesser der Federwindungen angepasst. Der Querschnitt einer derartigen Verschleißschutzschale 33 kann jedoch auch eine andere Form aufweisen, zum Beispiel dachförmig oder mehreckig. Entsprechend der Formgebung des Querschnittes bzw. des Querschnittradius können die einzelnen Windungen nur einen Berührungspunkt bzw. Berührungsbereich oder und mehr derartiger Berührungsbereiche aufweisen.

Zusätzlich oder alternativ zu den Verschleißschutzschalen 33 können Abstützelemente vorgesehen werden, die als Roll- und/oder Gleitschuhe ausgebildet sein können. Bezüglich der möglichen Ausgestaltung derartiger Gleitschuhe bzw. Rollschuhe und deren Funktion wird auf die DE 102 41 879 A1 und die DE 10 2004 006 879 A1 verwiesen. Die durch Schraubenfedern 30 gebildeten einzelnen Energiespeicher können lediglich aus einer einzigen Schraubenfeder, die einen gekrümmten Verlauf im unverspannten Zustand besitzt, gebildet sein. Ein derartiger Energiespeicher kann jedoch auch aus einer Mehrzahl von hintereinander angeordneten, kürzeren Schraubenfedern bestehen. Diese Schraubenfedern können entweder unmittelbar aneinander abgestützt sein oder aber sich über zwischengelegte, vorzugsweise keilförmige Zwischenstücke aneinander abstützen. Derartige Kraftspeicher sind beispielsweise durch die DE 197 49 678 A1 und die DE 198 10 550 C2 bekannt geworden.

Bezüglich der Ausgestaltung und Anordnung bzw. Führung derartiger Schraubenfedern bzw. Energiespeicher wird weiterhin auf die DE 199 09 044 A1, DE 196 03 248 A1, DE 196 48 342 A1, DE 102 09 838 A1 und DE 102 41 879 A1 verwiesen. Schraubenfedern sowie Verfahren zur Herstellung von Schraubenfedern sind weiterhin durch die DE 44 06 826 A1 und die DE 43 06 895 C1 vorgeschlagen worden. Auch können zumindest einzelne der Schraubenfedern 30 eine Ausgestaltung gemäß der WO 99/49234 aufweisen.

Um die Lebensdauer der verwendeten Schraubenfedern zu erhöhen bzw. einen Bruch der Endwindungen dieser Federn zu verhindern, kann es auch zweckmäßig sein, wenn diese Endwindungen gemäß der DE 42 29 416 A1 ausgebildet werden.

Zur Beaufschlagung der Schraubenfedern 30 besitzen die Blechbauteile 6 und 14 axiale Anformungen, an denen sich die Endwindungen der Federn 30 abstützen. Diese Anformungen können beispielsweise durch Anprägungen gebildet werden. Bezüglich der Ausgestaltung derartiger Anformungen wird auf den bereits erwähnten Stand der Technik verwiesen.

Bei dem dargestellten Ausführungsbeispiel erfolgt die radiale Abdichtung der Kammer 32 mittels einer ringförmigen, flächigen Dichtung 36.

Wie insbesondere aus Figur 2 und 3 ersichtlich ist, ist die Ringdichtung 36 axial zwischen dem ringförmigen Bereich 18 des Bauteiles 14 und dem ringförmigen Abschnitt 19 des Bauteiles 6 eingespannt.

Wie aus Figuren 2 ersichtlich ist, erfolgt die axiale Verbindung zwischen den Bauteilen 6 und 14 hier mittels Nietverbindungen 37, die hier im radialen Erstreckungsbereich des Dichtringes 36 vorgesehen sind.

Die ringförmige Dichtung 36 muss aus einem temperaturbeständigen, eine gewisse Elastizität aufweisenden Werkstoff hergestellt sein. Derartige Werkstoffe können auf Silikonbasis bzw. Gummibasis hergestellt sein. Eine besonders preisgünstige Realisierung einer derartigen Dichtung 36 kann durch Einsatz eines Materials auf Zellulosebasis, welches eine Latexbindung und/oder Latexbeschichtung aufweisen kann, realisiert werden. Durch die radiale Erstreckung der Dichtung 36 ist eine große Dichtfläche vorhanden.

Wie aus Figur 1 zu entnehmen ist, sind die Energiespeicher bzw. Schraubendruckfedern 30 und die diese aufnehmenden Kammerbereiche zumindest im Wesentlichen im radialen Erstreckungsbereich der Reibfläche 27 der Sekundärmasse 4 vorgesehen. Je nach Anwendungsfall können die Schraubendruckfedern 30 jedoch auch auf einem kleineren Durchmesser angeordnet werden, so dass sie zum Beispiel radial innerhalb der Reibfläche 27 zu liegen kommen. Zweckmäßig kann es sein, in dem so radial außen entstehenden Freiraum weitere Anschlagmittel und/oder Dämpfermittel vorzusehen, beispielsweise einen zweiten Dämpfer mit federnden Anschlägen und/oder Reibmittel, die parallel geschaltet sind mit den Federn 30.

Wie insbesondere aus Figur 1 zu entnehmen ist, sind die laschenförmigen Befestigungsbereiche 25 aus dem Blechformteil 21 herausgeformt, indem sie radial außen durch einen Trennschnitt und seitlich durch Ausschnitte gegenüber dem umgebenden Blechmaterial getrennt werden. Radial innen sind die Laschen 25 einstückig mit dem Blechformteil 21. In den Laschen 25 sind Öffnungen zur Bildung einer Nietverbindung 31 vorgesehen. Die freigeschnittenen Laschen 25 sind, wie aus Figur 1 und 3 erkennbar ist, in axialer Richtung derart verformt, dass sie gegenüber den benachbarten Blechbereichen des Bauteiles 21 axial versetzt sind. In Abänderung der dargestellten Ausführungsform könnten die Laschen 25 auch radial außen eine Verbindung mit dem Bauteil 21 besitzen. Gemäß einer weiteren Variante könnten die Laschen 25 auch um 180° verdreht ausgebildet werden, also radial außen einstückig in das Blechformteil 21 übergehen und radial innen einen Trennschnitt oder einen Ausschnitt aufweisen. Gemäß einer anderen Variante könnte das durch einen Trennschnitt bzw. Ausschnitt gebildete Ende einer Lasche 25 auch in Umfangsrichtung weisen. Bei einer derartigen Ausführungsform wären dann die Ausschnitte radial innerhalb und radial außerhalb einer derartigen Lasche angeordnet. Grundsätzlich können anstatt von Aus- bzw. Freischnitten ebenfalls Trennschnitte Verwendung finden. Bei letzterer Ausgestaltungsmöglichkeit ist es zweckmäßig, wenn dann im Fußbereich einer Lasche 25, also in dem Bereich, in dem die Lasche 25 in das Bauteil 21 übergeht, zumindest ein kleiner Ausschnitt vorhanden ist, von dem aus die Trennschnitte ausgehen.

In Abänderung der in den Figuren dargestellten Ausführungsform können zur Herstellung von Verbindungen 31 zwischen dem flanschartigen Bauteil 28 und dem Blechformteil 21 auch am flanschartigen Bauteil 28 laschenförmige Befestigungsbereiche 25 und/oder axiale Anprägungen, die in Richtung des Bauteiles 21 axial versetzt sind, vorgesehen werden. Die laschenförmigen Befestigungsbereiche 25 und/oder die axialen Anprägungen können dabei in ähnlicher Weise hergestellt und ausgebildet sein, wie dies in Zusammenhang mit dem Blechformteil 21 beschrieben wurde. Es ist auch möglich sowohl am Blechformteil 21 als auch am flanschartigen Bauteil 28 derart ausgebildete Befestigungsbereiche (Laschen und/oder Anprägungen) vorzusehen, die axial aufeinander zu weisen bzw. sich aneinander axial abstützen und miteinander verbunden sind.

Aus Figur 2 ist noch erkennbar, dass die die Reibfläche 27 bildende Bereiche des Blechformteils 21 axial gegenüber den radial innerhalb der Reibfläche 27 vorgesehenen Bereichen hervorstehen.

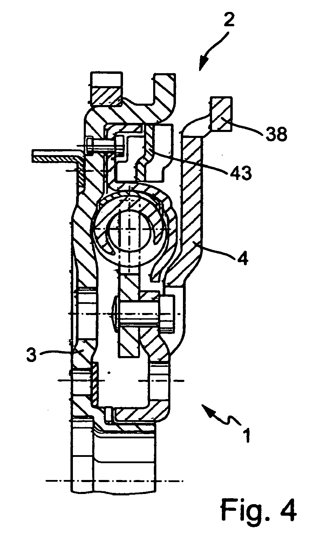

Wie aus Figur 1 und 4 ersichtlich ist, besitzt das Blechformteil 21 radial außen Befestigungsbereiche 38 für den Deckel bzw. das Gehäuse einer Reibungskupplung. Die Befestigungsbereiche 38 sind hier mittels Trennschnitten und/oder Freischnitten in radialer Richtung gegenüber den angrenzenden inneren Bereichen des Blechformteils 21 getrennt und axial aufgestellt.

Die Drehschwingungsdämpfungseinrichtung 1 bzw. das Zweimassenschwungrad 2 besitzt eine Verdrehbegrenzungseinrichtung 39, die den winkelmäßigen Wirkbereich des die Energiespeicher in Form von Federn 30 aufweisenden, drehelastischen Dämpfers 40 begrenzt. Die Verdrehbegrenzungseinrichtung 39 ist radial außerhalb des ringartigen Raums 32 bzw. des drehelastischen Dämpfers 40 angeordnet. Bei dem dargestellten Ausführungsbeispiel ist der ringförmige Raum 22 radial beabstandet von den radial äußeren Konturen der Primärmasse 3, welche von dem ringförmigen Bereich 12 gebildet sind.

Durch die in den Figuren 2 bis 4 ersichtliche Ausgestaltung der einzelnen Bauteile wird zwischen dem ringförmigen axialen Ansatz 10 der Primärmasse 3 und den die ringartige Kammer radial nach außen hin begrenzenden Bereichen 17 des Bauteils 14 ein ringförmiger, axial offener Bauraum 41 gebildet.

Die Verdrehbegrenzungseinrichtung 39 besitzt zumindest Anschläge 42, 43, die einerseits von der Sekundärmasse 4 und andererseits von der Primärmasse 3 getragen sind. Bei dem dargestellten Ausführungsbeispiel sind die umfangsmäßig miteinander zusammenwirkenden Anschläge zumindest im Wesentlichen in dem ringförmigen Bauraum 41 aufgenommen. Die von der Sekundärmasse 4 getragenen Anschläge 42 sind bei dem dargestellten Ausführungsbeispiel durch einstückig mit dieser ausgebildeten, in axialer Richtung verlaufenden bzw. abgebogenen Zungen 44 gebildet. Die Anschläge 42 können jedoch auch durch zusätzliche Bauteile gebildet werden, welche mit der Sekundärmasse 4, zum Beispiel verschweißt, vernietet oder verschraubt sind.

Die an der Primärmasse 3 vorgesehenen Anschläge 43 können durch axiale Anprägungen gebildet werden, welche zumindest am ringförmigen Bereich 18 angeformt sind. Die Anschläge 43 können jedoch auch durch ein zusätzliches ringförmiges Bauteil 45 gebildet werden, welches zum Beispiel in Figur 3 dargestellt ist. Dieses Bauteil 45 ist drehstarr mit der Primärmasse 3 verbunden. Diese Verbindung kann beispielsweise mittels Schweißung erfolgen, wie dies in den Figuren 2 und 3 angedeutet ist. Zur Bildung der Anschläge 43 kann dieses ringförmige Bauteil 45 ebenfalls entsprechend ausgebildete axiale Anprägungen besitzen. Alternativ kann sowohl der ringförmige Bereich 18 als auch das ringförmige Bauteil 45 entsprechende axiale Anprägungen bzw. Anformungen aufweisen.

Aus Figur 1 ist ersichtlich, dass die axialen Zungen 44 sich jeweils durch einen länglichen Schlitz 46 des ringförmigen Bauteils 45 hindurch erstrecken. Der Schlitz 46 ist winkelmäßig entsprechend dimensioniert, um die notwendige Verdrehung zwischen den beiden Massen 3, 4 zu ermöglichen. Dadurch wird gewährleistet, dass der Drehschwingungsdämpfer 40 einwandfrei arbeiten kann. Wirkungsmäßig ist die Verdrehbegrenzungseinrichtung 39 parallel geschaltet zum drehelastischen Dämpfer 40.

Obwohl es zweckmäßig sein kann, wenn die Anschläge 42 und 43 zur Begrenzung des Wirkbereiches des drehelastischen Dämpfers 40 unmittelbar miteinander zusammenwirken, ist es für viele Anwendungsfälle zweckmäßig, zwischen diesen Anschlägen 42, 43 Elemente 47 vorzusehen, die zumindest eine gewisse umfangsmäßige Dämpfung bewirken und somit einen zu harten Anschlag, und somit auch unakzeptable Geräusche, vermeiden. Die Elemente 47 können blockförmig ausgebildet sein und beispielsweise aus Kunststoff und/oder Elastomer bestehen. Die Elemente 47 können jedoch auch aus mehreren Elementen bzw. Werkstoffen, die entsprechend den Erfordernissen ausgewählt sind, bestehen. Beispielsweise können die umfangsmäßigen Endbereiche dieser Elemente 47 aus einem harten Elastomer bestehen und zwischen diesen Endbereichen kann ein Kern aus Kunststoff vorgesehen werden. Diese Werkstoffe können jedoch in Umfangsrichtung auch umgekehrt angeordnet werden.

Vorteilhaft kann es auch sein, wenn die Elemente 47 zumindest aus einer sehr harten bzw. steifen Anschlagfeder bestehen, die als Schraubenfeder oder als Gummiblock oder einer Kombination solcher Elemente bzw. Werkstoffe bestehen kann.

Die in Figur 1 dargestellte winkelmäßige Position zwischen den beiden Massen entspricht praktisch der maximal möglichen Relativverdrehung zwischen den beiden Massen in einer der beiden Relativverdrehrichtungen. In dieser Relativverdrehrichtung wirken die Anschläge 42 und 43 unter Zwischenlegung der dämpfenden Elemente 47 zusammen, um die Verdrehung zwischen den beiden Massen 3 und 4 zu begrenzen. In dieser winkelmäßigen Relativposition zwischen den beiden Schwungmassen 3 und 4 sind die Federn 30 komprimiert. Bei unkomprimierten Federn 30 befinden sich die Anschläge 42 umfangsmäßig zwischen zwei Anschlägen 43.

Das Zweimassenschwungrad 2 kann als Gesamteinheit gewuchtet werden. Das Wuchten kann, falls notwendig, auch gemeinsam mit dem auf die Sekundärmasse 2 montierten Kupplungsaggregat, bestehend aus zumindest einer Kupplungsscheibe und einer Kupplung, gewuchtet werden, wobei gegebenenfalls das Zweimassenschwungrad für sich vorgewuchtet werden kann und erst danach das Gesamtaggregat.

Zweckmäßig kann es auch sein, zumindest eine der Massen 3, 4 vor dem Zusammenbau des Zweimassenschwungrades vorzuwuchten. Falls notwendig, kann ein Nachwuchten des zusammengebauten Zweimassenschwungrades erfolgen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Drehschwingungsdämpfungseinrichtung
- 2: Zweimassenschwungrad
- 3: Primärmasse
- 4: Sekundärmasse
- 5: Lagerung
- 6: Blechformteil
- 7: Radial verlaufender Bereich
- 8: Verschraubungsöffnungen
- 9: Axialer Ansatz
- 10: Axialer Ansatz
- 11: Anlasserzahnkranz
- 12: Ringförmiger Bereich
- 13: Geberblech
- 14: Blechformteil
- 15: Topfförmiger Bereich
- 16: Radiale Abschnitte
- 17: Axiale Abschnitte
- 18: Ringförmiger Bereich
- 19: Ringförmiger Abschnitt
- 20: Axialer Bereich
- 21: Blechformteil
- 22: Axialer Ansatz
- 23: Zylindrische Aufnahme
- 24: Gleitlagerbuchse
- 25: Befestigungsbereich
- 26: Axiale Durchlässe bzw. Kühlöffnungen
- 27: Reibfläche
- 28: Flanschartiges Bauteil
- 29: Radiale Ausleger
- 30: Federn
- 31: Nietverbindungen
- 32: Ringförmiger Raum
- 33: Verschleißschutz
- 34: ...
- 35: ...
- 36: Ringförmige Dichtung
- 37: Nietverbindungen
- 38: Befestigungsbereiche
- 39: Verdrehbegrenzungseinrichtung
- 40: Drehelastischer Dämpfer
- 41: Bauraum
- 42: Anschlag
- 43: Anschlag
- 44: Axiale Zungen
- 45: Ringförmiges Bauteil
- 46: Schlitz
- 47: Elemente

## Patentansprüche

1. Zweimassenschwungrad bestehend aus einer mit der Abtriebswelle-eines Motors verbindbaren Primärmasse (3) und einer mit der Eingangswelle eines Getriebes verbindbaren Sekundärmasse (4), die mittels mindestens-einer Lagerung (5) konzentrisch und axial zueinander positioniert sind und entgegen der Wirkung einer Dämpfungseinrichtung (40) mit Energiespeichern zumindest begrenzt zueinander verdrehbar sind, wobei die Energiespeicher in einer von den Bauteilen der Primärmasse (3) gebildeten und ein viskoses Medium beinhaltenden ringartigen Kammer (32) aufgenommen sind, wobei die die Kammer (32) bildenden Bauteile und die Sekundärmasse (4) Beaufschlagungsbereiche für die Energiespeicher tragen, wobei die ringartige Kammer (32) zumindest durch zwei Bauteile (6,14) begrenzt ist, die radial außerhalb der Energiespeicher (30) miteinander dicht verbunden sind, und wobei die Kammer (32) von den radial äußeren Konturen der Primärmasse (3) radial beabstandet ist, **dadurch gekennzeichnet, dass** radial außerhalb der ringartigen Kammer (32) die Primärmasse (3) und die Sekundärmasse (4) jeweils einander zugeordnete Anschläge (42, 43) zur Begrenzung der Relativverdrehung zwischen den beiden Massen (3,4) aufweisen.

2. Zweimassenschwungrad nach Anspruch 1, **dadurch gekennzeichnet, dass** die Primärmasse (3) einen ringartigen axialen Ansatz (10) bildet, der radial beabstandet ist von der ringartigen Kammer (32) und diese zumindest teilweise axial übergreift.

3. Zweimassenschwungrad nach einem der Ansprüche 1 und 2, **dadurch gekennzeichnet, dass** der ringartige axiale Ansatz (10) der Primärmasse(3) und die die ringartige Kammer (32) radial nach außen hin begrenzenden Bereiche (17) der die Kammer bildenden Bauteile (6, 14) einen ringförmigen, axial offenen Bauraum (41) begrenzen, der zumindest die Anschläge (42, 43) der beiden Massen wenigstens teilweise aufnimmt.

4. Zweimassenschwungrad nach Anspruch 1 oder 2, **dadurch gekennzeichnet, dass** zumindest in einer der Relativverdrehrichtungen zwischen den beiden Massen ein zumindest elastisches Anschlagelement (47) vorgesehen ist.

5. Zweimassenschwungrad nach Anspruch 4, **dadurch gekennzeichnet, dass** das elastische Anschlagelement (47) durch wenigstens einen aus Kunststoff und/oder Elastomer bestehenden Anschlagkörper gebildet ist.

6. Zweimassenschwungrad nach einem der Ansprüche 1 bis 5, **dadurch gekennzeichnet, dass** zwischen den Anschlägen der beiden Massen zumindest ein Anschlagdämpfer (47) vorgesehen ist.

7. Zweimassenschwungrad nach Anspruch 5 oder 6, **dadurch gekennzeichnet, dass** die Anschlagkörper (47) verdrehfest mit den Anschrägen (42, 43) der Primärmasse und/oder der Sekundärmasse sind.

8. Zweimassenschwungrad nach einem der Ansprüche 4 bis 7, **dadurch gekennzeichnet, dass** die Anschlagelemente (47) umfangsmäßig verschiebbar zwischen den Anschläge der beiden Massen angeordnet sind.

9. Zweimassenschwungrad nach einem der Anspruche 4 bis 8, **dadurch gekennzeichnet, dass** die Anschlagelemente (47) an einer ringartigen Fläche entlangschiebbar sind.

10. Zweimassenschwungrad nach den Ansprüchen 4 bis 9, **dadurch gekennzeichnet, dass** die Anschlagelemente (47) eine drehzahlabhänglge Reibung erzeugen.

11. Zweimassenschwungrad nach einem der Ansprüche 1 bis 10, **dadurch gekennzeichnet, dass** die Anschläge (42) der Sekundärmasse (4) durch einstückig angeformte axiale Vorsprünge gebildet sind.

12. Zweimassenschwungrad nach einem der Ansprüche 1 bis 11, **dadurch gekennzeichnet, dass** die Sekundärmasse (4) als Blechformteil ausgebildet ist.

## Claims

1. Dual mass flywheel comprising a primary mass (3) which can be connected to the output shaft of an engine, and a secondary mass (4) which can be connected to the input shaft of a transmission, which masses (3, 4) are positioned concentrically and axially with respect to one another by means of at least one bearing (5) and can be rotated at least to a limited extent with respect to one another counter to the effect of a damping device (40) with energy stores, wherein the energy stores are accommodated in a ring-like chamber (32) which is formed by the components of the primary mass (3) and contains a viscous medium, wherein the components which form the chamber (32) and the secondary mass (4) form loading regions for the energy stores, wherein the ring-like chamber (32) is bounded at least by two components (6, 14) which are connected in a seal-forming fashion to one another radially outside the energy stores (30), and wherein the chamber (32) is spaced radially apart from the radially outer contours of the primary mass (3), **characterized in that**, radially outside the ring-like chamber (32), the primary mass (3) and the secondary mass (4) each have stops (42, 43) which are assigned to one another for the purpose of limiting the relative rotation between the two masses (3, 4).

2. Dual mass flywheel according to Claim 1, **characterized in that** the primary mass (3) forms a ring-like axial shoulder (10) which is spaced radially apart from the ring-like chamber (32) and at least partially engages axially over the latter.

3. Dual mass flywheel according to one of Claims 1 and 2, **characterized in that** the ring-like axial shoulder (10) of the primary mass (3) and the regions (17), bounding the ring-like chamber (32) radially toward the outside, of the components (6, 14) which form the chamber bound an annular, axially open installation space (41) which at least partially accommodates at least the stops (42, 43) of the two masses.

4. Dual mass flywheel according to Claim 1 or 2, **characterized in that** an at least elastic stop element (47) is provided at least in one of the relative rotational directions between the two masses.

5. Dual mass flywheel according to Claim 4, **characterized in that** the elastic stop element (47) is formed by at least one stop body which is composed of plastic and/or elastomer.

6. Dual mass flywheel according to one of Claims 1 to 5, **characterized in that** at least one stop damper (47) is provided between the stops of the two masses.

7. Dual mass flywheel according to Claim 5 or 6, **characterized in that** the stop bodies (47) are secured so as to rotate with the stops (42, 43) of the primary mass and/or of the secondary mass.

8. Dual mass flywheel according to one of Claims 4 to 7, **characterized in that** the stop elements (47) are arranged in such a way that they can be displaced by their circumferences between the stops of the two masses.

9. Dual mass flywheel according to one of Claims 4 to 8, **characterized in that** the stop elements (47) can be displaced along a ring-like surface.

10. Dual mass flywheel according to Claims 4 to 9, **characterized in that** the stop elements (47) generate rotational-speed-dependent friction.

11. Dual mass flywheel according to one of Claims 1 to 10, **characterized in that** the stops (42) of the secondary mass (4) are constructed by axial projections which are integrally formed.

12. Dual mass flywheel according to one of Claims 1 to 11, **characterized in that** the secondary mass (4) is embodied as a sheet-metal shaped part.

## Revendications

1. Volant double masse se composant d'une masse primaire (3) pouvant être assemblée à un arbre de sortie d'un moteur et d'une masse secondaire (4) pouvant être assemblée à l'arbre d'entrée d'une boîte de vitesses, qui sont positionnées de façon concentrique et axiale l'une par rapport à l'autre au moyen d'au moins un palier (5) et qui peuvent tourner l'une par rapport à l'autre au moins de façon limitée en opposition à l'action d'un dispositif d'amortissement (40) avec des accumulateurs d'énergie, dans lequel les accumulateurs d'énergie sont logés dans une chambre annulaire (32) formée par les composants de la masse primaire (3) et contenant un fluide visqueux, dans lequel les composants formant la chambre (32) et la masse secondaire (4) portent des zones d'action pour les accumulateurs d'énergie, dans lequel la chambre annulaire (32) est limitée au moins par deux composants (6, 14), qui sont assemblés de façon étanche l'un à l'autre radialement à l'extérieur des accumulateurs d'énergie (30), et dans lequel la chambre (32) est espacée radialement des contours radialement extérieurs de la masse primaire (3), **caractérisé en ce que** la masse primaire (3) et la masse secondaire (4) présentent, radialement à l'extérieur de la chambre annulaire (32), des butées (42, 43) respectivement associées l'une à l'autre destinées à limiter la rotation relative entre les deux masses (3, 4).

2. Volant double masse selon la revendication 1, **caractérisé en ce que** la masse primaire (3) forme un épaulement axial annulaire (10), qui est espacé radialement de la chambre annulaire (32) et recouvre axialement celle-ci au moins en partie.

3. Volant double masse selon l'une quelconque des revendications 1 et 2, **caractérisé en ce que** l'épaulement axial annulaire (10) de la masse primaire (3) et les zones (17) des composants (6, 14) formant la chambre, qui limitent la chambre annulaire (32) radialement vers l'extérieur, limitent un espace de montage annulaire (41) axialement ouvert, qui contient au moins partiellement au moins les butées (42, 43) des deux masses.

4. Volant double masse selon la revendication 1 ou 2, **caractérisé en ce qu'**il est prévu un élément de butée au moins élastique (47) au moins dans un des sens de rotation relative entre les deux masses.

5. Volant double masse selon la revendication 4, **caractérisé en ce que** l'élément de butée élastique (47) est formé par au moins un corps de butée composé de matière plastique et/ou d'élastomère.

6. Volant double masse selon l'une quelconque des revendications 1 à 5, **caractérisé en ce qu'**il est prévu au moins un amortisseur de butée (47) entre les butées des deux masses.

7. Volant double masse selon la revendication 5 ou 6, **caractérisé en ce que** les corps de butée (47) sont solidaires en rotation avec les butées (42, 43) et la masse primaire et/ou de la masse secondaire.

8. Volant double masse selon l'une quelconque des revendications 4 à 7, **caractérisé en ce que** les éléments de butée (47) sont déplaçables suivant la périphérie entre les butées des deux masses.

9. Volant double masse selon l'une quelconque des revendications 4 à 8, **caractérisé en ce que** les éléments de butée (47) sont déplaçables le long d'une surface annulaire.

10. Volant double masse selon l'une quelconque des revendications 4 à 9, **caractérisé en ce que** les éléments de butée (47) produisent une friction qui dépend de la vitesse de rotation.

11. Volant double masse selon l'une quelconque des revendications 1 à 10, **caractérisé en ce que** les butées (42) de la masse secondaire (4) sont formées par des protubérances axiales formées d'une seule pièce.

12. Volant double masse selon l'une quelconque des revendications 1 à 11, **caractérisé en ce que** la masse secondaire (4) est réalisée sous la forme d'un bloc profilé en tôle.
